# EUROPEAN PATENT SPECIFICATION

(11) **EP 1 763 392 B1**
(45) Date of publication and mention of the grant of the patent: **31.07.2013**
(21) Application number: 05744252.7
(22) Date of filing: 20.05.2005
(51) Int. Cl.: B01D 35/10, B01D 37/02

(54) **FLUID FILTER**
FLUIDFILTER
FILTRE POUR FLUIDE

(30) Priority: 20.05.2004 GB 0411290; 14.01.2005 GB 0500770
(43) Date of publication of application: 21.03.2007
(73) Proprietor: Water Maiden Holdings Limited, Preston Lancashire PR1 3HP (GB)
(72) Inventor: FRYE, Michael, John, Ernest, London W8 5RH (GB); JENSEN, Soren Ingemann, London EC4Y 0DF (GB); MCINTYRE, Philip, Preston PR1 3HP (GB)
(74) Representative: Korenberg, Alexander Tal
(86) International application number: PCT/GB2005/002001
(87) International publication number: WO 2005/113110

(56) References cited:
- EP-A- 0 280 052
- EP-A- 0 344 633
- US-A- 5 470 470

## Description

The present invention relates to a fluid filter, and particularly although not exclusively to a high pressure and throughput filter for removing solid material from a liquid such as water. The invention also extends to a method of operation of a filter.

A filter which makes use of fibres to trap material entrained within the medium is disclosed in US patents US-A-5470470 and US-A-4617120. A similar device is disclosed in EP-A-0280052.

The principle of operation of the device of EP-A-0280052 is shown schematically in figures 1 and 1a. The filter 100 comprises a filter housing 101 with an inlet end 102 and an outlet end 103. Extending longitudinally of the housing are a plurality of parallel fibres, held in place by a support 106. Surrounding the fibres is a flexible waterproof membrane 104.

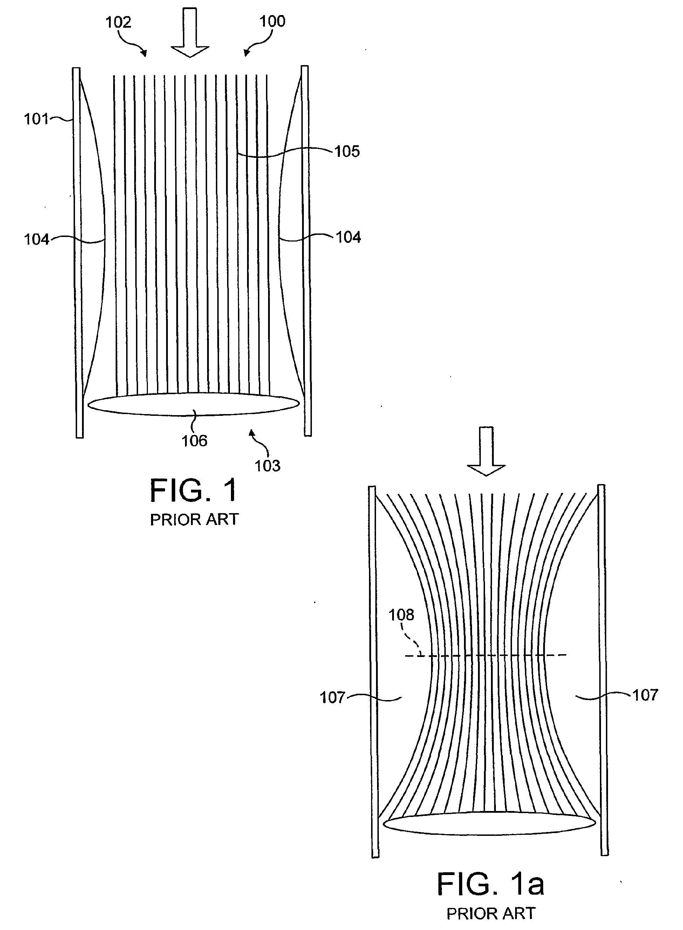

During filtration, the membrane 104 is pressurised as shown at 107 in figure 1a, thereby compressing the fibres towards an internal pinch point 108. The material to be filtered is forced through the filter in the direction shown by the arrow. The filter may be flushed and cleaned by releasing the pressure within the membrane and back-flushing in the opposite direction to the normal flow of filtration.

Whilst this type of filter can be effective, for certain applications it is desired to filter out increasingly smaller size particles. One way of achieving this objective would be to make the fibres finer, such that the gap between adjacent fibres is decreased when the membrane is pressurised. This option can achieve increased levels of filtration, but is also expensive and difficult to manufacture.

Furthermore, the more fragile fibres are easily damaged during operation of the filter.

It is known to use a powder known as diatomaceous earth as a filter medium. However, as this powder is so fine, it is used in large thick filtration beds such that the powder particles hold together. Although diatomaceous earth provides a high filtration capacity, its large scale use has the disadvantage of being very heavy to transport, and shipping costs can be prohibitively expensive. Furthermore, once the medium to be filtered has passed through the earth bed, the filter cake that is left trapped in the earth and the earth itself must be scraped out of the filter in order to clean the filter. This is time consuming and is inefficient as the filter cannot operate whilst the cleaning process is being carried out.

It is an objective of the present invention to improve the filtration level of such a filter whilst reducing the problems associated with the prior art.

According to a first aspect of the present invention, there is provided a filter for filtering a fluid, comprising a filter housing having an inlet end and an outlet end, a distensible member extending longitudinally of the housing, a plurality of fibres extending longitudinally of the housing and being secured at the inlet end, whereby when the distensible member is distended the fibres are compressed against either the housing or against each other to create a graduated filter matrix between the inlet end and a pinch area formed between the compressed fibres and either an inner surface of the housing or the distensible member, and whereby the filter includes an the additional filter medium comprising a powder which is trapped in the pinch area for further filtration of the fluid.

According to a second aspect of the present invention, there is provided a method of operating a filter having a filter housing with a first end and a second end, a distensible member extending longitudinally of the housing, a plurality of fibres extending longitudinally of the housing and being secured at the first end; the method comprising distending the distensible member to compress the fibres either against the housing or against each other to create a graduated filter matrix between the first end and a pinch area between the compressed fibres and either an inner surface of the housing or the distensible member; passing an additional filter medium comprising a powder into the first end of the filter such that it becomes trapped in the pinch area, and passing a fluid to be filtered from the first end to the second end.

The additional filter medium clogs up the gaps between fibres, providing a finer filtration capability than the prior art filters, even though the diameter of the fibres used need be no smaller than in the prior art for a given size of filter. As a small amount only of the additional filter medium is required to be added to the filter, the cost of using the additional filter medium is much reduced over its use in the filtration beds of prior art filters. Thus, the level of filtration is increased without the cost penalties associated with the prior art high filtration capacity filters.

Preferred features and embodiments of the invention are set out in the dependent claims. Preferably, the additional filter medium is diatomaceous earth. Such a medium has the advantage of having the capacity to filter very fine particles and only a relatively small amount is required for use with the present invention.

The invention may be carried into practice in a number of ways, and several specific embodiments will now be described by, way of example, with reference to the accompanying drawings, in which:
**Figure 1** is a longitudinal section through a prior art filter;
**Figure 1a** is a longitudinal section through the filter of figure 1 in filtration mode;
**Figure 2** is a longitudinal section through a first embodiment of the present invention;
**Figure 2a** is a longitudinal section through a second embodiment of the present invention;
**Figure 2b** is a longitudinal section through a third embodiment of the invention;
**Figure 3** is a detailed plan view of the head matrix of each of the embodiments;
**Figure 4** is a longitudinal section showing the filter of Figure 2 in filtration mode;
**Figure 5** is a longitudinal section of the filter of Figure 2 in flushing mode.
**Figure 6** is a longitudinal section through a fourth embodiment of the present invention; and
**Figure 7** is a schematic representation of a fibre anchor according to an aspect of the present invention; and
**Figure 8a** is a schematic plan view of an alternative filter construction;
**Figure 8b** is a schematic front view of the filter construction of Figure 8a;
**Figure 8c** is a schematic side view of the filter construction of Figure 8a; and
**Figure 9** is a longitudinal section through a fourth embodiment of the invention.

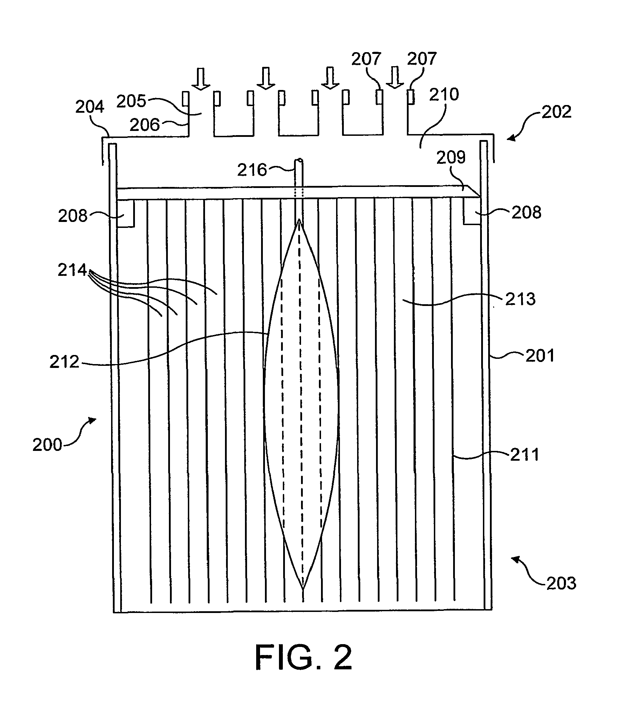

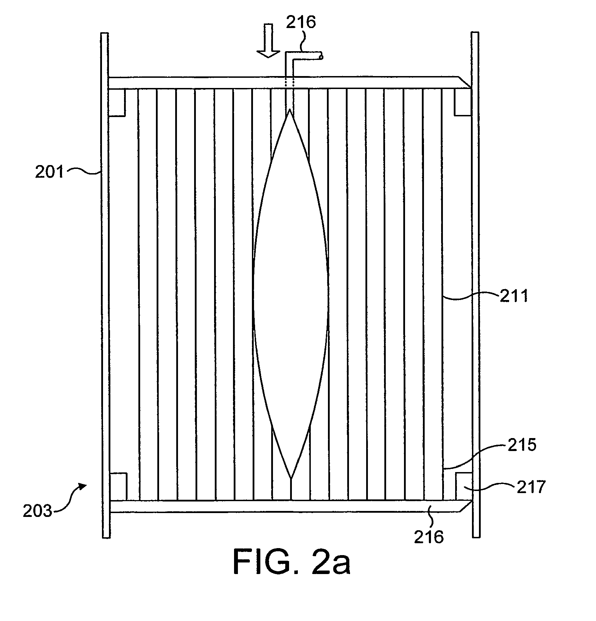

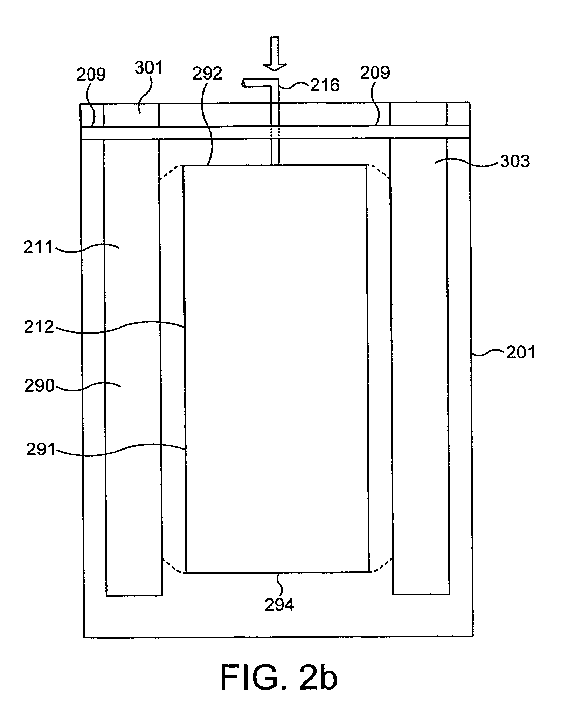

Turning first to Figure 2, there is shown a filter 200 of a first embodiment of the invention. The filter is contained within a cylindrical filter housing 201 the size of which may be selected according to the particular fluid pressures, flow rates or volumes required. Alternatively, the housing could be shaped so that its width tapers towards its distal ends. For example, in a specific application the housing has an external diameter of 315mm and an internal diameter of 290mm. The filter housing can be made of any suitable rigid material such as metal or an appropriate plastics material. The housing has an inlet end 202 and an outlet end 203, respectively allowing the filtered medium to ingress to and to egress from the filter.

The inlet end is capped by means of an inlet cap 204 having a plurality of inlet apertures 205. Each of these is supplied by an individual inlet pipe 206, thereby allowing if required for a variety of liquids and/or gases to be supplied in parallel to the filter. Suitable connecting means 207 are provided to couple the inlet pipes to further piping systems (not shown) which furnish the liquids and/or gases to the filter at the required pressure and flow rates.

Adjacent to the inlet end 202 of the housing 201 there is cast an internal securing ring 208. This ring provides a lip upon which a head matrix 209 is securely mounted. It is preferred, although not essential, that the head matrix 209 be capable of being easily removed in order to facilitate maintenance and/or replacement. The volume of the filter housing between the inlet cap 204 and the head matrix 209 defines an inlet chamber 210, within which the incoming liquids and/or gases may mix.

The outlet end 203 of the housing may be left open, as shown in Figure 2, or alternatively an exit cap and exit pipes (not shown) may be provided to direct the outgoing fluid after it has passed through the filter.

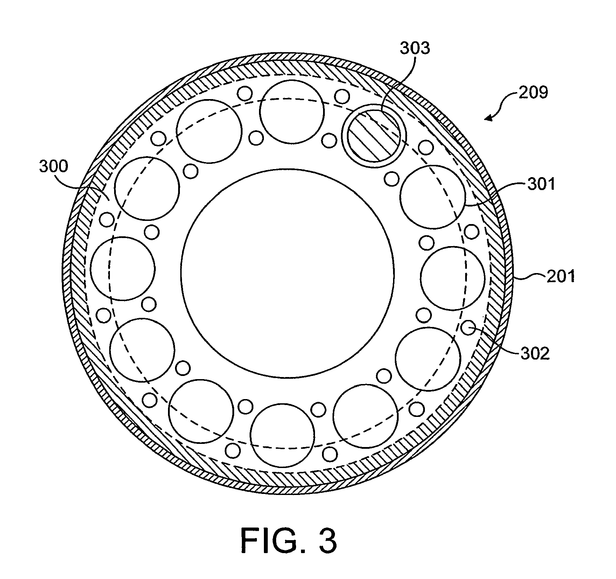

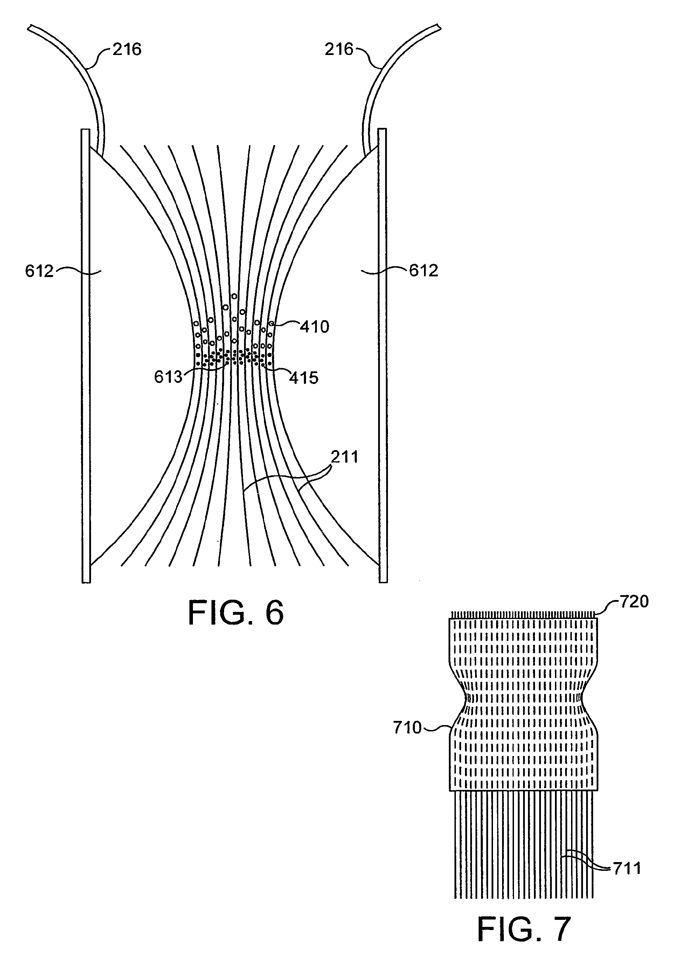

Referring now to Figure 3, the head matrix 209 consists of a removable plate 300, made from any suitable rigid materials (such as metal or a plastics material) having a plurality of apertures spaced around the circumference for the receipt of fibre bundles, one of which is shown at 303. The fibres may be secured in any convenient way within the head matrix, for example by melting together approximately 30mm of the fibre ends to form a solid mass and then securing that mass by means of cross-struts (not shown) within the aperture 301. Between and surrounding the fibre bundle apertures 301 are a plurality of smaller apertures 302, the purpose of which is to allow for the ingress of fluid through the head matrix. Both types of aperture are preferably spaced at equidistant points around the circumference of the head matrix, so as to provide a generally uniform distribution of fibres and also a generally uniform fluid flow between and through the fibre bundles. Alternatively, a collar 710 may be placed around the fibres prior to melting of the fibres. The collar 710 as shown in Figure 7 is then crimped to retain the fibres 711 in a bundle before the ends 720 of the fibres are fused together. The collar can then be inserted into the aperture 301 in the head matrix.

Turning back now to Figure 2, it will be seen that in a filtration chamber 213 below the head matrix the individual fibres 211 of the bundles 301 spread out to form a fairly uniform fibre curtain around the periphery of the housing 201. The fibres extend substantially axially along the length of the filtration chamber 213, and are oriented substantially parallel to the direction of flow through the chamber. In this embodiment, the ends of the fibres are not secured in any way, and they simply hang loose.

The fibres 211 may be of any suitable dimension and material, depending upon application. In one example, the fibres may be of polymer or nylon, or carbon fibre or metal with a diameter of between 0.15mm and 0.5mm. The fibres may be solid or hollow, and may be of circular, rectangular or any other cross-section. For some applications, it may be advantageous for the fibres to be at least partially elastic, either along or across the fibre length. For such fibres, the desired shape-recovery characteristic may also be chosen according to the required application. The fibres may have a smooth or a rough surface and may if required be coated. Fibre coatings such as Teflon and zinc may be appropriate. They may also if desired be electrically charged. Charging the fibres will encourage ionisation, which may be important in some applications. Also it may be desired for the fluid, the fibres, areas within the housing or any combination of these to be magnetised.

In an alternative embodiment, shown in Figure 2a, the fibres 211 may be secured at the outlet end 203, rather than being left loose. In this embodiment, the lower fibre ends 215 are secured an outlet matrix head 216 having apertures (not shown) for securing the fibre bundles and further apertures (also not shown) for egress of the filtrate. The outlet matrix head 216 is secured in position in some suitable way, for example by means of a further ring 217 cast on the inside of the filter housing 201. Alternatively, the outlet matrix head 216 could be left loose. In this arrangement the filter could be back flushed.

Turning back again to Figure 2, it will be seen that secured within the centre of the filtration chamber 213 is an elongate balloon or distensible member 212. The balloon is disposed centrally within the chamber and extends substantially axially along the chamber so as to be oriented substantially parallel to the direction of flow through the filter. In a first mode, shown in Figure 2, the balloon is relaxed and accordingly presents little or no obstruction to the free flow of fluid through the filter. Fluid entering through the apertures 302 passes substantially unobstructed between the fibre bundles and between gaps 214 between the individual fibres, before passing out of the outlet. No filtering takes place in this mode, but a van der Waals effect may develop.

When it is desired to start filtering, the balloon 212 is inflated by means of a control fluid (hydraulic or pneumatic) which is supplied along an inlet pipeline 216. Alternatively, the balloon could be filled with materials that are substantially resistive to motion (be it rapid motion or slow motion) such as a powder or particles such as sand. As is shown in the drawing, the pipeline may pass through the head matrix 209, or alternatively (not shown) the pipe may avoid the head matrix by entering from the side or from the outlet end.

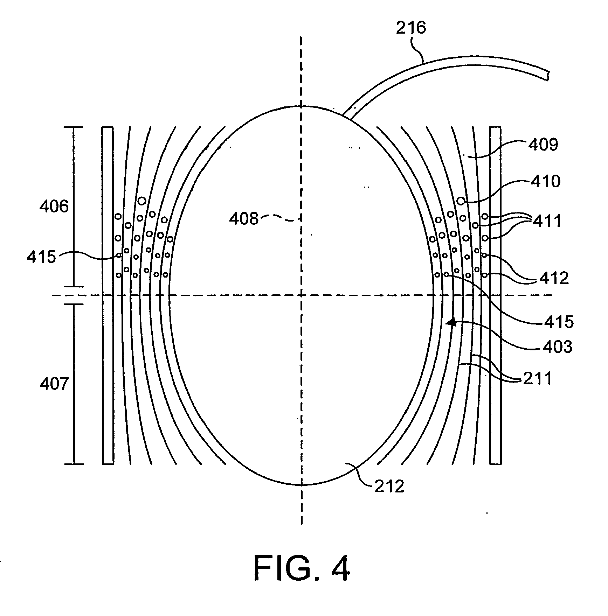

In the filtration mode of Figure 4, the distended balloon defines a pinch point 403 consisting of a narrow annular region or area between the perimeter of the balloon and the inner circumference of the housing, where the available flow area is at a minimum. The position of the pinch point 403 defines an upstream section 406 on the inlet section of the pinch point, and a downstream section 407 on the outlet side. Preferably, the shape of the balloon is such that, in its distended state, it is substantially symmetrical about the central longitudinal axis 408 of the chamber. Depending upon the application, the upstream and downstream sections may be mirror images of each other. Alternatively (not shown) the upstream section may define a more rapidly-changing annular area, along the length of the filter, than the downstream section, or vice versa.

In any event, when the filter is in filtration mode, fluid passing through it is exposed to a gradually decreasing annular surface area up until the pinch point 403, and then is exposed to a gradually increasing annular surface area. The gradual nature of the decreasing surface area prior to the pinch point is enhanced by making the balloon 212 stiffer at its ends and softer in the middle so that, as it inflates, it forms a generally ovoid shape.

As the balloon expands, it starts to exert a radial force on the surrounding fibres, forcing the fibres to press together and to press against the rigid wall 201 of the filter housing. This of course reduces the size of the passageways 409 between the fibres.

If the fibres 211 are made of a compressible material, the fibres themselves may start to deform, thereby reducing even further the size of the passageways 409 through which the fluid can pass.

Once the balloon has been expanded to the extent required, a fine powder 415 is added into the filter through the apertures 302. The powder 415 is preferably diatomaceous earth but can be any appropriate fine powder, for example crushed mussel shells. The diatomaceous earth is trapped between the fibres close to the pinch point 403, and clogs up the small spaces between fibres in this area of the filter. The powder acts as a further filter for very very fine particles.

Only a proportionally very small amount of the powder 415, relative to the size of the filter, is required to create the additional filtration effect. The fluid or fluids to be filtered are then passed through the filter. Typically, the fluid may comprise water or another liquid mixed with one or more solid particulates of varying sizes. However, it may also comprise a gas or a mixture of liquid and gas. As the water and the particulates pass through the upstream section, the gradually decreasing passageway size causes the particulates to be trapped between the fibres. Larger particulates 410 will be trapped relatively early, whereas finer particulates 411 will be trapped at a point closer to the pinch point 403. The very finest particles 412 will be trapped in the powder 415 just prior to the pinch point.

The tapered and gradual increase in fibre compression within the upstream section prevents the larger particles 410 which are caught in the coarser filter matrix, defined by the upper port of the upstream section, from slipping down. This would of course be undesirable since larger particles which were to move downwards towards the pinch point and the fine powder would tend to reduce the gradual nature of the taper and hence the ability of the filter to systematically separate out particles of differing sizes. In the embodiments of the present invention, the gradual nature of the taper and the clogging effect of the powder (combined in some embodiments with the natural elasticity of the fibres) ensures that each fibre is securely held by the fibres which surround it. The fibres in the upstream section cannot "flap around" or move, with the consequence that the trapped particles cannot move either.

Typically, the balloon will be distended by an appropriate amount such that only fluid can pass the pinch point. Of course, however, it will be understood that in some applications it may be perfectly acceptable for extremely fine particulates to pass the filter, in which case the balloon need not be distended to the same extent. By varying the hydraulic or pneumatic pressure on the line 216, the filter may be adjusted to allow through only particles which are smaller than a desired size.

Where the fluids to be filtered include both a liquid and a gas, a bubble generator (not shown) within the inlet chamber 210 may be used to ensure that the fluid to be filtered is an intimate mixture of liquid and gaseous bubbles, along with the particulates to be separated out. In some applications it may be convenient to introduce gaseous ozone to provide sterilisation during the filtration process. Where a gas is introduced into the filter, bubbles of the gas may be cut to micro-bubbles (that is to say bubbles of particularly small size, down to the smallest possible bubble size). This provides a substantially increased surface area of contact between the gas and the fluid to be filtered, greatly improving the aeration process. The entire unit may be turned to facilitate the aeration process.

Figure 2b shows a slightly different embodiment in which the balloon 212 is of a shape having flat upper 292 and lower 294 ends. The surface of the balloon in the distended position is shown at 291, with the dotted line 290 representing the surface of the balloon in the filtration mode. This figure also shows the way in which the fibre bundles extend through the apertures 301 of the head matrix 209. As the balloon expands and presses against these bundles, the fibres start to spread out fill the gaps between them, ultimately forming a uniform filtration matrix within the annular space between the housing and the periphery of the balloon.

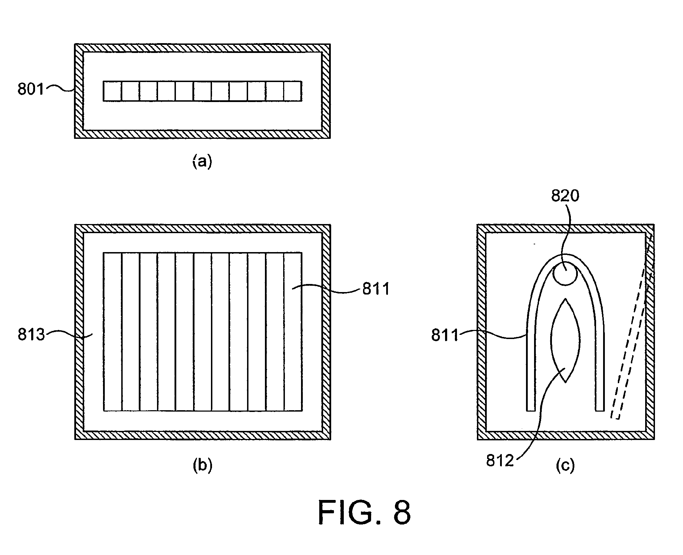

Figure 8 shows an alternative construction of the filter, in which the housing 801 is rectangular. The fibres 811 are hung over a rail 820 to form a fibre curtain inside the filtration chamber 813. A front and /or back wall of the housing 801 can be hinged or otherwise moved inward towards the fibres in order to compress the fibres. A balloon 812 can be placed inside the fibre curtain to assist compression of the fibres, from inside the curtain, or alternatively balloon (s) can be placed adjacent the interior walls of the housing 801 to compress the fibres from outside of the fibre curtain.

Figure 6 shows the fine powder 415 in use with a filter in which there is more than one balloon 612, placed adjacent the inner wall of the housing rather than along the central axis of the filter housing. In this case, the fibres 211 extend along the central axis such that when the balloons 612 are inflated as shown in Figure 6, they compress the fibres together in a bunch between them rather than against the inner wall of the housing. The fine powder 615 clogs up the small gap between the compressed fibres in the same manner as in the embodiment of Figure 4. When a fluid is passed through the filter, larger particles 410 become trapped in the gaps between fibres whilst the very small particles 613 are captured in the powder 615 and are thus filtered out of the fluid.

Whether the filter includes a single balloon or a plurality of balloons, as filtration continues, particles of varying sizes become trapped within the upstream section 406, forming so-called "filter cake".

In the downstream area 407 beyond the pinch point 403, the fibres then naturally spread out again. The gradual enlargement of the available annular area for the filtrate, along with the presence of the fibres, encourages smooth and linear flow. The gradual enlargement of the area helps to create a Venturi effect, which further helps the flow.

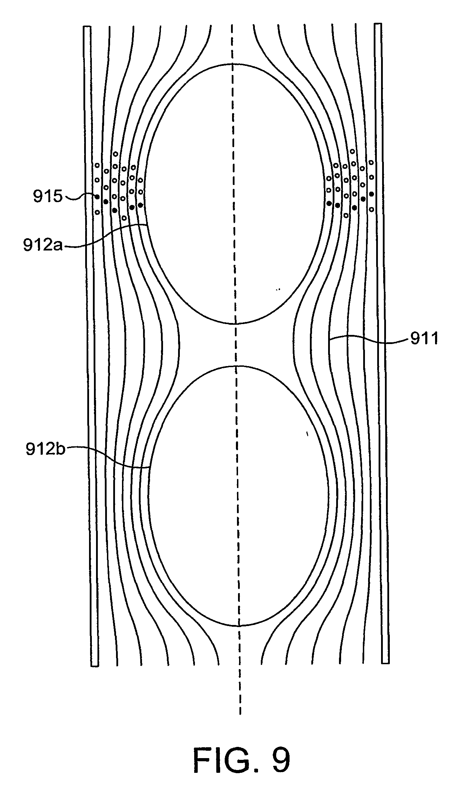

In a further embodiment shown in Figure 9, the filter includes two balloons 912a and 912b arranged in series along a central axis of the filter. The fibres 911 surround the balloons such that when the balloons are inflated as shown in Figure 9, the balloons compress the fibres together against the inner wall of the housing. The fine powder 915 is added to the filter such that it becomes trapped in the compressed fibres of one of the balloons 912a. In this manner, balloon 912a can be used to filter out small particles using the fine powder 915 and balloon 912b can be used to filter out a different type of particle, for example such as particles having a characteristic unrelated to particle size. The balloons can be inflated to different levels of distension. It will be understood by the skilled person that such an arrangement of balloons arranged in series can also be applied to the embodiment of Figure 6 in which the balloons 612 surround the fibres.

In some specific applications, the required filtration characteristics may be achieved by providing ridges and/or recesses (not shown) on the surface of the balloon and/or on the inner surface of the cylindrical wall 201.

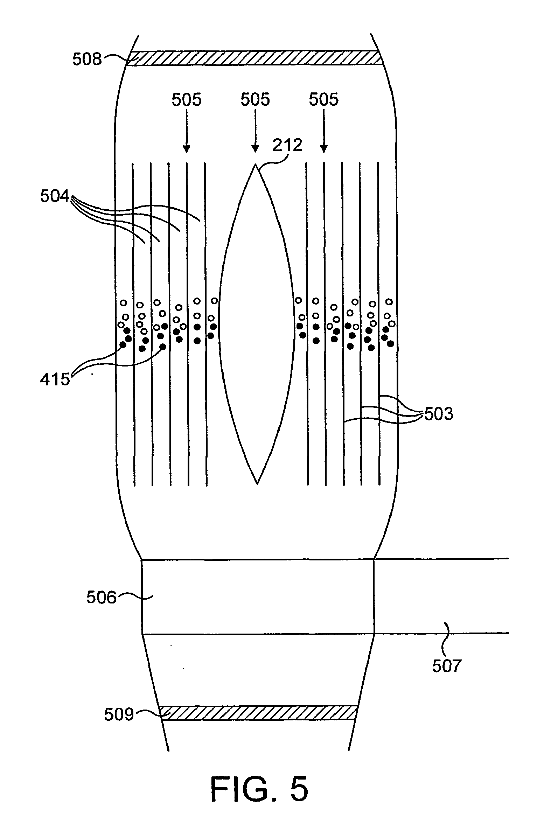

When the filter has been in operation for some time, a quantity of filter cake will build up with the fine powder. This may be removed by flushing. Figure 5 schematically shows the flushing process.

In order to flush the filter, the pressure within the balloon 212 is released, thereby removing the compressive force from the fibres and allowing them to return to their uncompacted and loose state as shown at 503. As the passages 504 increase in size, the fibres reduce their grip on the filter cake powder, allowing the cake to be washed through by means of a rinsing medium 505. This could be any suitable cleaning liquid or gas, for example water, steam, or even the medium to be filtered (with included particulates). The rinsing medium 505 is passed through the filter in the same direction that the medium to be filtered was passed through in the filtration mode: that is, the filter is forward-flushed.

Appropriate valves 506 and piping 507 may be employed so that the washing medium and the filter cake do not contaminate the filtrate. Upstream and/or downstream pressure sensors 508, 509 may be used to determine when the filter is overly clogged with filter cake, and when it is necessary to carry out the flushing process. The process may be carried out entirely automatically, thereby maximising the time that the filter spends in the filtration mode, so increasing throughput.

As part of the flushing process, ultrasound may be applied to the filter or to the fibres to help the cake shake loose. Also, it may be desired to dry the filter cake before release by means such as generating a vacuum within the filter or passing hot air through it.

It will of course be understood that although the flushing process described above with reference to Figure 5 will always be carried out in the forward direction, in the alternative embodiment of Figure 2a (in which the fibres are anchored at both ends) a backward flush could be used instead or in addition, in each case either with or without releasing the balloon pressure.

The filter of the present invention may be scaled in size as desired according to the volumes to be filtered and/or the application in hand. In one preferred arrangement the filter may be manufactured as a plug-in module, in a variety of different sizes.

Although the filter is shown with its longitudinal axis vertical in the drawings, it will be understood that in some applications the axis may be horizontal. The fluid passing through the filter may be pumped, at high or low pressure, or alternatively may be allowed to pass through the filter entirely by the influence of gravity.

It will be understood that the skilled man will be able to adjust a variety of different parameters, as required according to the particular application in hand. Such adjustable parameters include pressure; temperature; fibre size; fibre length; fibre coating; charge on fibre; magnetic field strength of areas within the housing, fibres or fluid; the manner in which the fibres are anchored; flow volume; filter housing material; type of feed; method of inflating the balloon; balloon taper; flushing materials volumes and pressures; and the addition of gases to the mix.

There are a large number of specific applications which may benefit from the use of a filter according to the present invention. Typical applications might include:
- 1.: Filtration for reverse osmosis.
- 2.: The removal of cement, grit and so on following an industrial process such as precast concrete.
- 3.: Separation of coagulated products.
- 4.: Separation of biological tissue.
- 5.: Separation of coagulated blood and the like.
- 6.: Separation of vegetable matter, for example the waste water from olive oil production.
- 7.: Reducing the turbidity of water generally, where required for technical or for legal reasons.
- 8.: The removal of silt from a liquid/water.
- 9.: Ballast water.

## Claims

1. A filter for filtering a fluid, comprising a filter housing having an inlet end and an outlet end, a distensible member extending longitudinally of the housing, a plurality of fibres extending longitudinally of the housing and being secured at the inlet end, whereby when the distensible member is distended the fibres are compressed against either the housing or against each other to create a graduated filter matrix between the inlet end and a pinch area formed between the compressed fibres and either an inner surface of the housing or the distensible member, **characterised in that** the filter includes an additional filter medium comprising a powder which is trapped between the fibres at the pinch area.

2. A filter as claimed in claim 1 in which the powder is diatomaceous earth.

3. A filter as claimed in claim 1 or claim 2 in which the distensible member is an elongale balloon, which is stiffer at its ends and softer in the middle.

4. A filter as claimed in any one of claims 1 to 3 in which the filter housing width tapers towards the distal ends of the housing

5. A filter as claimed in any one of claims 1 to 4 in which recesses or ridges are provided on the surface of the distensible member or on the inner surface of the housing.

6. A filter as claimed in any preceding claim in which the distensible member extends along a central axis of the filter housing, with the fibres surrounding the distensible member.

7. A filter as claimed in claim 6 comprising at least two of the distensible members arranged in series along a central axis of the filter housing.

8. A filter as claimed in any of claims 1 to 5 in which the fibres extend along a central axis of the filter housing with the distensible member extending along the inner wall of the housing.

9. A filter as claimed in claim 8 comprising at least two of the distensible members arranged to compress the fibres between them when distended.

10. A filter as claimed in claim 8 or claim 9 wherein at least two of the distensible members are arranged in series extending along the inner wall of the housing.

11. A filter as claimed in any one of claims 1 to 10 in which the fibres are secured by means of a head matrix (300) at the inlet end (202).

12. A filter as claimed in claim 10 in which the head matrix comprises a plate having apertures (302) for the ingress of fluid to be filtered.

13. A filter as claimed in claim 11 in which the head matrix comprises a plate having apertures (301) therein within which are fixed the fibres (211).

14. A filter as claimed in claim 13 in which a separate bundle (303) of fibres is fixed with each aperture (301).

15. A filter as claimed in any one of claims 1 to 14 in which the fibres are secured in bundles (303).

16. A filter as claimed in any one of the preceding claims including flushing means for flushing the filter in a direction from the inlet end (202) to the outlet end (204).

17. A filter as claimed in any one of the preceding claims including sensor means (508,509) for determining when flushing is required.

18. A filter as claimed in claim 17 including a valve (506) for separating flushing fluid from filtrate.

19. A filter as claimed in any one of the preceding claims in which the fibres are elastic.

20. A filter as claimed in any one of the preceding claims in which the fibres are compressible in a direction perpendicular to their length.

21. A filter as claimed in any one of the preceding claims in which the fibres are electrically charged.

22. A filter as claimed in any one of the preceding claims in which the fibres are magnetised.

23. A filter as claimed in any one of the preceding claims in which areas of the housing are magnetised.

24. A method of operating a filter having a filter housing with a first end and a second end, a distensible member extending longitudinally of the housing, a plurality of fibres extending longitudinally of the housing and being secured at the first end; the method comprising distending the distensible member to compress the fibres either against the housing or against each other to create a graduated filter matrix between the first end and a pinch area between the compressed fibres and either an inner surface of the housing or the distensible member; the method being **characterised by** passing an additional filter medium comprising a powder into the first end of the filter such that it becomes trapped in the pinch area, subsequently passing a fluid to be filtered from the first end to the second end.

25. A method as claimed in claim 24 in which the powder is diatomaceous earth.

26. A method as claimed in claim 23 or claim 24 or claim 25 including the step of flushing the filter by releasing the distensible member and passing a flushing fluid from the first to the second end.

27. A method as claimed in claim 26 in which the flushing fluid comprises or includes a fluid of the type being filtered.

28. A method of operating a filter as claimed in any of claims 1 to 23.

## Patentansprüche

1. Filter zum Filtern eines Fluids, das ein Filtergehäuse mit einem Einlassende und einem Auslassende aufweist, ein dehnbares Element, das sich der Länge nach vom Gehäuse erstreckt, eine Vielzahl von Fasern, die sich der Länge nach vom Gehäuse erstrecken, und die am Einlassende befestigt sind, wobei, wenn das dehnbare Element gedehnt wird, die Fasern entweder gegen das Gehäuse oder gegeneinander gedrückt werden, um eine Verlaufsfiltermatrix zwischen dem Einlassende und einem Quetschbereich zu erzeugen, der zwischen den komprimierten Fasern und entweder der Innenfläche des Gehäuses oder dem dehnbaren Element gebildet wird, **dadurch gekennzeichnet, dass** das Filter ein zusätzliches Filtermedium enthält, das ein Pulver aufweist, welches zwischen den Fasern im Quetschbereich eingeschlossen ist.

2. Filter nach Anspruch 1, wobei das Pulver Kieselerde ist.

3. Filter nach Anspruch 1 oder Anspruch 2, wobei das dehnbare Element ein länglicher Ballon ist, der an den Enden steifer und in der Mitte weicher ist.

4. Filter nach einem der Ansprüche 1 bis 3, wobei sich die Breite des Filtergehäuses in Richtung der distalen Enden des Gehäuses verjüngt.

5. Filter nach einem der Ansprüche 1 bis 4, wobei Ausnehmungen oder Rippen auf der Oberfläche des dehnbaren Elements oder an der Innenfläche des Gehäuses vorgesehen sind.

6. Filter nach einem der vorhergehenden Ansprüche, wobei sich das dehnbare Element entlang der Mittelachse des Filtergehäuses erstreckt, wobei die Fasern das dehnbare Element umgeben.

7. Filter nach Anspruch 6, das wenigstens zwei der dehnbaren Elemente aufweist, die in Reihe entlang der Mittelachse des Filtergehäuses angeordnet sind.

8. Filter nach einem der Ansprüche 1 bis 5, wobei sich die Fasern entlang der Mittelachse des Filtergehäuses erstrecken, wobei sich das dehnbare Element entlang der Innenwand des Gehäuses erstreckt.

9. Filter nach Anspruch 8, das wenigstens zwei der dehnbaren Elemente aufweist, die angeordnet sind, um die Fasern zwischen sich zu komprimieren, wenn sie gedehnt sind.

10. Filter nach Anspruch 8 oder Anspruch 9, wobei wenigstens zwei der dehnbaren Elemente in Reihe und sich entlang der Innenwand des Gehäuses erstreckend angeordnet sind.

11. Filter nach einem der Ansprüche 1 bis 10, wobei die Fasern mittels einer Hauptmatrix (300) am Einlassende (202) befestigt sind.

12. Filter nach Anspruch 10, wobei die Hauptmatrix eine Platte mit Öffnungen (302) für den Eintritt zu filternden Fluids aufweist.

13. Filter nach Anspruch 11, wobei die Hauptmatrix eine Platte mit Öffnungen (301) aufweist, in denen die Fasern (211) befestigt sind.

14. Filter nach Anspruch 13, wobei ein separates Bündel (303) von Fasern an jeder Öffnung (301) befestigt ist.

15. Filter nach einem der Ansprüche 1 bis 14, wobei die Fasern bündelweise (303) befestigt sind.

16. Filter nach einem der vorhergehenden Ansprüche, das eine Spüleinrichtung zum Spülen des Filters in Richtung vom Einlassende (202) zum Auslassende (204) aufweist.

17. Filter nach einem der vorhergehenden Ansprüche, das eine Sensoreinrichtung (508, 509) zum Ermitteln, wann eine Spülung erforderlich ist, aufweist.

18. Filter nach Anspruch 17, das ein Ventil (506) zum Trennen von Spülfluid vom Filtrat aufweist.

19. Filter nach einem der vorhergehenden Ansprüche, wobei die Fasern elastisch sind.

20. Filter nach einem der vorhergehenden Ansprüche, wobei die Fasern in senkrechter Richtung zu ihrer Länge komprimierbar sind.

21. Filter nach einem der vorhergehenden Ansprüche, wobei die Fasern elektrisch geladen sind.

22. Filter nach einem der vorhergehenden Ansprüche, wobei die Fasern magnetisiert sind.

23. Filter nach einem der vorhergehenden Ansprüche, wobei Bereiche des Gehäuses magnetisiert sind.

24. Verfahren zum Bedienen eines Filters, das ein Filtergehäuse mit einem ersten Ende und einem zweiten Ende aufweist, ein dehnbares Element, das sich der Länge nach vom Gehäuse erstreckt, eine Vielzahl von Fasern, die sich der Länge nach vom Gehäuse erstrecken, und die am ersten Ende befestigt sind, wobei das Verfahren das Dehnen des dehnbaren Elements umfasst, um die Fasern entweder gegen das Gehäuse oder gegeneinander zu drücken, um eine Verlaufsfiltermatrix zwischen dem ersten Ende und einem Quetschbereich zwischen den komprimierten Fasern und entweder der Innenfläche des Gehäuses oder dem dehnbaren Element zu bilden, wobei das Verfahren **gekennzeichnet ist durch** Leiten eines zusätzlichen Filtermediums, das ein Pulver aufweist, in das erste Ende des Filters, so dass es im Quetschbereich eingeschlossen wird, und **durch** nachfolgendes Leiten eines zu filternden Fluids vom ersten Ende an das zweite Ende.

25. Verfahren nach Anspruch 24, wobei das Pulver Kieselerde ist.

26. Verfahren nach Anspruch 23 oder Anspruch 24 oder Anspruch 25, das den Schritt des Spülens des Filters durch Freigeben des dehnbaren Elements und Leiten eines Spülfluids vom ersten an das zweite Ende umfasst.

27. Verfahren nach Anspruch 26, wobei das Spülfluid ein Fluid des Typs, der gefiltert wird, aufweist.

28. Verfahren zum Bedienen eines Filters nach einem der Ansprüche 1 bis 23.

## Revendications

1. Filtre pour filtrer un fluide, comprenant un logement de filtre comportant une extrémité d'entrée et une extrémité de sortie, un élément pouvant être distendu s'étendant longitudinalement par rapport au logement, une pluralité de fibres s'étendant longitudinalement par rapport au logement et étant fixé au niveau de l'extrémité d'entrée, moyennant quoi, lorsque l'élément pouvant être distendu est distendu, les fibres sont comprimées contre le logement ou les unes contre les autres pour créer une matrice filtrante graduée entre l'extrémité d'entrée et une zone de pinçage formée entre les fibres comprimées et une surface intérieure du logement ou l'élément pouvant être distendu, **caractérisé en ce que** le filtre comprend un matériau filtrant supplémentaire comprenant une poudre qui est piégée entre les fibres au niveau de la zone de pinçage.

2. Filtre selon la revendication 1, dans lequel la poudre est de la terre de diatomée.

3. Filtre selon la revendication 1 ou la revendication 2, dans lequel l'élément pouvant être distendu est un ballon allongé, qui est plus raide au niveau de ses extrémités et plus souple au milieu.

4. Filtre selon une quelconque des revendications 1 à 3, dans lequel la largeur de logement de filtre s'effile vers les extrémités distales du logement.

5. Filtre selon une quelconque des revendications 1 à 4, dans lequel des évidements ou des arêtes sont prévus sur la surface de l'élément pouvant être distendu ou sur la surface intérieure du logement.

6. Filtre selon une quelconque revendication précédente, dans lequel l'élément pouvant être distendu s'étend le long d'un axe central du logement de filtre, les fibres entourant l'élément pouvant être distendu.

7. Filtre selon la revendication 6, comprenant au moins deux des éléments pouvant être distendus agencés en série le long d'un axe central du logement de filtre.

8. Filtre selon une quelconque des revendications 1 à 5, dans lequel les fibres s'étendent le long d'un axe central du logement de filtre, l'élément pouvant être distendu s'étendant le long de la paroi intérieure du logement.

9. Filtre selon la revendication 8, comprenant au moins deux des éléments pouvant être distendus agencés pour comprimer les fibres entre eux lorsqu'ils sont distendus.

10. Filtre selon la revendication 8 ou la revendication 9, dans lequel au moins deux des éléments pouvant être distendus sont agencés en série s'étendant le long de la paroi intérieure du logement.

11. Filtre selon une quelconque des revendications 1 à 10, dans lequel les fibres sont fixées au moyen d'une matrice de tête (300) au niveau de l'extrémité d'entrée (202).

12. Filtre selon la revendication 10, dans lequel la matrice de tête comprend une plaque comportant des ouvertures (302) pour l'entrée de fluide destiné à être filtré.

13. Filtre selon la revendication 11, dans lequel la matrice de tête comprend une plaque comportant des ouvertures (301) dans celle-ci à l'intérieur desquelles sont fixées les fibres (211).

14. Filtre selon la revendication 13, dans lequel un faisceau séparé (303) de fibres est fixé avec chaque ouverture (301).

15. Filtre selon une quelconque des revendications 1 à 14, dans lequel les fibres sont fixées dans des faisceaux (303).

16. Filtre selon une quelconque des revendications précédentes, comprenant des moyens de rinçage pour rincer le filtre dans une direction de l'extrémité d'entrée (202) à l'extrémité de sortie (204).

17. Filtre selon une quelconque des revendications précédentes, comprenant des moyens capteurs (508, 509) pour déterminer l'instant auquel le rinçage est requis.

18. Filtre selon la revendication 17, comprenant une valve (506) pour séparer un fluide de rinçage du filtrat.

19. Filtre selon une quelconque des revendications précédentes, dans lequel les fibres sont élastiques.

20. Filtre selon une quelconque des revendications précédentes, dans lequel les fibres sont compressibles dans une direction perpendiculaire à leur longueur.

21. Filtre selon une quelconque des revendications précédentes, dans lequel les fibres sont électriquement chargées.

22. Filtre selon une quelconque des revendications précédentes, dans lequel les fibres sont magnétisées.

23. Filtre selon une quelconque des revendications précédentes, dans lequel des zones du logement sont magnétisées.

24. Procédé de fonctionnement d'un filtre comportant un logement de filtre avec une première extrémité et une seconde extrémité, un élément pouvant être distendu s'étendant longitudinalement par rapport au logement, une pluralité de fibres s'étendant longitudinalement par rapport au logement et étant fixées au niveau de la première extrémité ; le procédé comprenant la distension de l'élément pouvant être distendu pour comprimer les fibres contre le logement ou les unes contre les autres pour créer une matrice filtrante graduée entre la première extrémité et une zone de pinçage entre les fibres comprimées et une surface intérieure du logement ou l'élément pouvant être distendu ; le procédé étant **caractérisé par** le passage d'un matériau filtrant supplémentaire comprenant une poudre dans la première extrémité du filtre de sorte qu'elle soit piégée dans la zone de pinçage, et par la suite le passage d'un fluide destiné à être filtré de la première extrémité à la seconde extrémité.

25. Procédé selon la revendication 24, dans lequel la poudre est de la terre de diatomée.

26. Procédé selon la revendication 23 ou la revendication 24 ou la revendication 25, comprenant l'étape du rinçage du filtre en relâchant l'élément pouvant être distendu et en faisant passer un fluide de rinçage de la première à la seconde extrémité.

27. Procédé selon la revendication 26, dans lequel le fluide de rinçage comprend ou inclut un fluide du type filtré.

28. Procédé d'utilisation d'un filtre selon une quelconque des revendications 1 à 23.
